# EUROPEAN PATENT SPECIFICATION

(11) **EP 2 048 934 B1**
(45) Date of publication and mention of the grant of the patent: **04.01.2012**
(21) Application number: 07768924.8
(22) Date of filing: 10.07.2007
(51) Int. Cl.: A01G 5/06, A47F 7/00, A47G 7/06

(54) **DEVICE AND HOLDER FOR KEEPING CUT FLOWERS IN CONDITION**
VORRICHTUNG UND HALTER ZUM FRISCHHALTEN VON SCHNITTBLUMEN
DISPOSITIF ET RÉCIPIENT SERVANT À CONSERVER DES FLEURS COUPÉES EN BON ÉTAT

(30) Priority: 11.07.2006 NL 1032146
(43) Date of publication of application: 22.04.2009
(73) Proprietor: Vital Vases Patent B.v., 5571 TJ Bergeijk (NL)
(72) Inventor: MEEUWS, Gerardus, Johannes, Jozef, Maria, NL-6029 PX Sterksel (NL); BURGMANS, Johannes, Petrus, Franciscus, Maria, NL-5563 AD Westerhoven (NL); KONING, Anton, NL-4176 BH Tuil (NL); JAMERS, Renier, Cornelis, Petrus, Helena, NL-5571 CK Bergeijk (NL)
(74) Representative: Jilderda, Anne Ayolt
(86) International application number: PCT/NL2007/050342
(87) International publication number: WO 2008/007958

(56) References cited:
- WO-A-01/93662
- WO-A-2006/132528
- NL-C2- 1 020 544
- US-A1- 2007 113 469

## Description

The present invention relates to a device for keeping cut flowers in condition, comprising a holder for receiving the cut flowers therein in a suitable medium, in particular water, and comprising cooling means with at least one cooling body which is capable of heat-exchanging contact with the medium.

A device of the type stated in the preamble is known from a Netherlands patent registered under number 1020544. The device described herein comprises a tubular shaft, in which an exchangeable vase-like holder can be releasably placed. The holder and the shaft here take a mutually close-fitting form, so that a cooling body provided on the shaft enters into heat-exchanging contact with a wall of the holder when the holder is received in the shaft. The cooling body in turn is in heat-exchanging contact with a cooling device connected thereto. The holder is intended for containing cut flowers in a liquid such as water, a gel or jelly, which is thus cooled at the position of the cooling body so as to keep the cut flowers fresh for a longer time.

This known device is particularly intended for showing cut flowers in a shop environment, wherein a number of such housings are integrated in a rack so as to simultaneously display a corresponding number of separate bunches of flowers, particularly bouquets. The view is herein focussed on the crowns of the respective bouquets of flowers.

A drawback of this known device is that, for an adequate heat discharge, the cooling device placed directly on the cooling body must have voluminous cooling fins and ventilating means for a forced airflow on a warm side thereof. Such provisions require extra space, and therefore detract from the aesthetic aspects of the whole. The known device is therefore particularly suitable as a display device in a shop environment, but is less suitable for use in interiors, wherein it is precisely the appearance of the whole that is an important factor. Furthermore, the direct placing of the cooling device against the cooling body unavoidably results in a temperature gradient in the cooling body in a direction transversely of the cooling body. The cooling capacity of the cooling body will thus vary in this direction and, in the most extreme case, can cool insufficiently at a first position while freezing phenomena occur at a second position in the medium of the holder.

The present invention has for its object, among others, to provide a device of the type stated in the preamble wherein this drawback of the known device is obviated to at least a significant extent.

In order to achieve the intended object, a device of the type described in the preamble has the feature according to the invention that the cooling means comprise a cooling device which is separated from the cooling body and which is in heat-exchanging contact with the at least one cooling body by means of at least one cooling conduit and a cooling medium flowing at least during operation therein. Because the cooling device is thus physically separated form the cooling body, this latter can be given an extremely compact form without the need to take into account space and ventilation options necessary for the cooling device. The cooling means do not therefore need to have an impact, or hardly so, on the design and aesthetic value of the device as a whole.

The flowing cooling medium nevertheless provides an adequate thermal coupling of the cooling device to the cooling body which, if desired, can here moreover enter into contact with the cooling medium over a whole dimension so as to bring about a more homogeneous cooling. A temperature of the cooling medium herein determines a minimum and maximum cooling capacity. The device according to the invention thus ensures a significant extension of the lifespan of the cut flowers, and thereby a considerable reduction in the costs for continuous presentation thereof. The cooled holder inhibits the growth of bacteria and other micro-organisms, whereby the medium in the holder remains clear and fresh for a longer time.

A preferred embodiment of the device according to the invention has the feature that the at least one cooling conduit comprises a primary cooling conduit in which, at least during operation, a primary cooling medium flows and a secondary cooling conduit which, at least during operation, carries a secondary cooling medium, and that the primary and secondary cooling conduits are in heat-exchanging contact by means of a heat exchanger. A heat exchanger is thus arranged between the cooling device and the cooling body, so that different cooling media can be used for the cooling device on the one hand and the cooling body on the other. These cooling media can thus be adapted optimally to each other. A toxic or otherwise less safe cooling medium can particularly be applied for the primary cooling medium, while for safety reasons the secondary cooling medium can conversely then be harmless and environmentally friendly. This increases the safety of the device to a considerable extent.

For practical installation of the device, a further particular embodiment of the device according to the invention has the feature that the cooling conduit is at least partly flexible. The flexible conduit can readily be selected to the correct length and, if desired, curved during placing so that it is concealed in invisible manner.

In a further preferred embodiment the device according to the invention is characterized in that the at least one cooling body extends at least practically all around a substantially cup-shaped inner space for at least partly receiving the holder therein for removal and in heat-exchanging contact. Because the holder is per se releasable from the cooling body, the holder can be readily taken off or out for separate filling and optionally cleaning. This is a particular advantage from a practical viewpoint, although it also enhances general safety. Furthermore, the holder can thus be easily exchanged for another, similar holder, which can thus be placed very quickly with a fresh bouquet of flowers therein. The surrounding cooling body here provides for a continuous, adequate conditioning of the flowers, which therefore have a longer lifespan.

Instead of being a stand-alone unit, the device can also be integrated into the layout of a space. A particular embodiment of the device according to the invention has the feature in this respect that at least the at least one cooling body is arranged in a top of a piece of furniture, in particular a tabletop or a top of a sideboard. The directly visible part of the device according to the invention is thus formed integrally with the top of a piece of furniture, and thus provides an extra dimension in the context of the overall design of the whole. One or more holders are placed in the cooling bodies during use in order to thus display a corresponding number of (bouquets of) cut flowers.

The physical separation, according to the invention, between cooling device on the one hand and cooling body on the other moreover makes it possible to make shared use of the cooling device for a plurality of cooling bodies and holders. A further particular embodiment of the device according to the invention therefore has the feature that a number of cooling bodies are coupled to a shared cooling device by means of an optionally shared cooling conduit, and that the cooling bodies are in heat-exchanging contact with a number of holders. The manufacturing and operating cost of the cooling device can thus be spread over a number of holders.

In order to nevertheless provide a sufficient cooling capacity, a further embodiment of the device according to the invention has the feature that the cooling device comprises a compressor cooling which is able and adapted to cause alternate expansion and compression of a cooling medium. Such a compressor cooling is commercially available in various cooling capacities, so that an adequately dimensioned cooling device can always be adapted to the number and size of the holders for cooling therewith. Owing to the physical separation from the cooling body, the cooling device can be disposed out of sight.

A particularly silent device according to the invention is characterized in that the cooling device comprises a Peltier element, a cold side of which is in heat-exchanging contact with the cooling medium and a warm side thereof with a forced airflow of ambient air during operation. A Peltier element is a thermoelectric component which is able to realize a temperature difference between the warm and cold side thereof in the order of magnitude of 10-50 °C. This temperature difference depends on an electrical potential difference applied over the element, and is thus adjustable. On the cold side a temperature in the order of only a few degrees Celsius can thus be achieved at room temperature, while the temperature on the warm side can rise to several tens of degrees Celsius. This temperature range is highly suitable for application in the device according to the invention. Furthermore, a Peltier-element has no moving parts and therefore no mechanical wear. Not only does this result in a long lifespan, but also in silent operation.

A method for displaying cut flowers at a location can be embodied in particularly practical manner using the device according to the invention. A bouquet of cut flowers is herein arranged in a holder, the holder is placed in heat-exchanging contact with the cooling body at the location and, when deterioration of the bouquet is imminent, the holder with flowers is exchanged for an at least similar holder with a fresh bouquet of cut flowers. Such a method can be carried out by an end user him/herself or be obtained as a service from another party, who for instance makes this his/her profession or business. This other party then has the responsibility for displaying fresh flowers at all times and, when deterioration is imminent, for exchanging the flowers for a fresh bouquet which is supplied in a separate holder.

In order to avoid undesirable splashing of water over an edge of a holder during change-over of the holders or during transport, an at least substantially liquid-tight cover can be closed round the holder with the bouquet therein when the holder is exchanged. The cover herein closes around an upper edge of the holder in order to thus enclose the liquid therein.

The invention also relates to a holder for application in the device according to the invention, and will now be further elucidated on the basis of several exemplary embodiments and an associated drawing. In the drawing:
- figure 1: shows a cross-section of an embodiment of a device with holder according to a first exemplary embodiment of the invention; and
- figure 2: shows a cross-section of a device with holders according to a second exemplary embodiment of the invention.

The figures are purely schematic and not drawn to scale. For the sake of clarity some dimensions in particular can be shown exaggerated to a greater or lesser extent. Corresponding parts are designated as far as possible in the figures with the same reference numeral.

Figure 1 shows a first embodiment of a device according to the invention for keeping cut flowers in condition. The device comprises a vase-like holder 10 for receiving cut flowers therein in a suitable medium, such as water in particular. Optionally specific nutrients, bacteria inhibitors or other agents for extending lifespan can optionally be added to the medium to further extend the lifespan of the flowers. Holder 10 is manufactured substantially integrally from a suitable plastic by means of injection moulding or other suitable thermo-forming process, and has a volume typically in the order of one to several tens of litres. Because the holder is formed integrally, it is completely seamless and guaranteed to be watertight. For the material of holder 10 a choice can be made from a wide range of plastics, varying from fully opaque, such as for instance polyethylene, polypropylene and ABS, to translucent or even transparent plastics such as polycarbonate and polymethyl methacrylate (PMMA).

Vase-like holder 10 is received removably in a vase-like outer casing 20 of the device, which in this example takes a double-walled form for an improved thermal insulation and in this example is moreover filled with a suitable insulating material such as polyurethane foam or polystyrene foam. Diverse materials can be used for the outer casing, adapted to a living environment, varying from natural materials such as wood and glass to plastics and metals.

A cooling element 30 of cooling means forming part of the device is accommodated close to an underside in outer casing 20. In this example the cooling body comprises a metal cone, for instance of aluminium or copper, with a thickness of about 5-10 millimetres, in which one or more continuous channels are formed internally for receiving a flowing cooling medium therein. Channels 31 provide for an increase in the heat-exchanging surface area with the cooling medium so as to enhance an optimal heat exchange with the cooling medium.

The cooling means further comprise a cooling device 35 which is accommodated in a base station 40 beneath holder 10,20 and which is adapted for and capable of a forced cooling of the whole. Use is made in this example of a compressor cooling in respect of cooling device 35, which circulates a primary cooling medium such as freon in a primary cooling conduit 361,362, and herein alternately compresses into a liquid phase and evaporates the medium.

Via a heat exchanger 37 the primary cooling medium enters into heat-exchanging contact with a secondary cooling medium, such as glycol, which is circulated via a secondary cooling conduit 381,382. The primary cooling medium is herein guided to the heat exchanger via a feed conduit 361 and flows back via a return conduit 362. The secondary cooling conduit likewise comprises a feed conduit 381 which connects to channels 31 in cooling body 30, and a return conduit 382 which feeds the secondary medium back to the heat exchanger. For all cooling conduits 361,362,381,382 use is made in this example of fixed metal conduits, this with a view to a long lifespan and low maintenance.

A fan 39 is further arranged in base station 40 which generates a forced airflow for the purpose of discharging heat produced by cooling device 35. If desired, an electronic control can be added to cooling device 35 for monitoring and adjusting the temperature in the cooling conduits so as to thus prevent freezing in conduits 381,382 and of the medium in holder 10. Furthermore, the base can also be equipped with an optical sensor or a pressure sensor for recording the possible presence of a (filled) holder 10 and for switching on or off the cooling device and fan on the basis thereof, so as to thus prevent unnecessary energy loss and noise.

All electrical and electronic components in base station 40, such as cooling device 35, an optional control and fan 39 are provided with an electric power supply (not further shown) which is coupled to the mains electricity via a normal cable. If desired, the device can however also be embodied with an optionally rechargeable battery power supply so that a cable connection can be omitted.

Cooling body 30 forms part of an inner wall of outer casing 20 and herein extends all around a cup-shaped inner space into which the underside of holder 10 drops. With a precise mutual fit and connection of holder 10 and cooling body 30 an adequate heat-exchanging contact is created here between the two parts. The wall of holder 10, and thereby the medium in holder 10, will hereby be cooled continuously at the position of cooling body 30. Owing to this active cooling of the medium in the holder, the flowers arranged therein will stay fresh for a considerably longer time. The insulating outer casing 20 here reduces the influence of the ambient temperature.

As well as being a table model in diverse sizes and embodiments, the device according to the invention can also be applied as hanging or standing model. The cooling device can thus also be accommodated for instance in an optionally mobile column 20, with which the whole supports directly on a floor. Resting on the column is then a holder 10 with a volume in the order of ten litres or more for receiving a large bouquet of flowers therein.

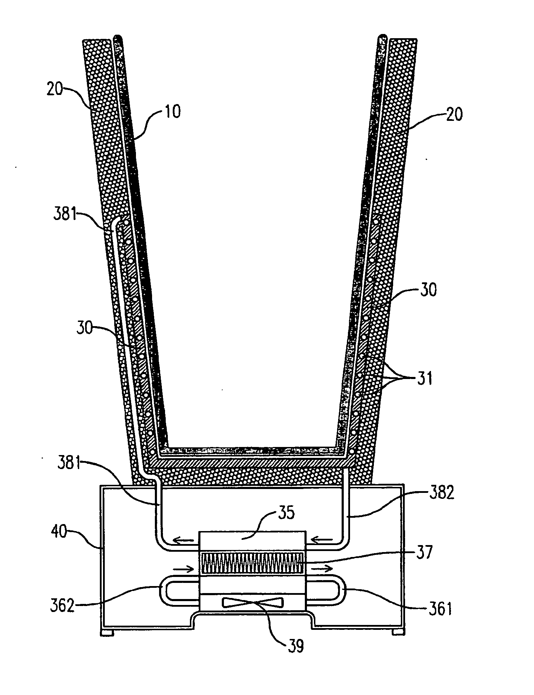

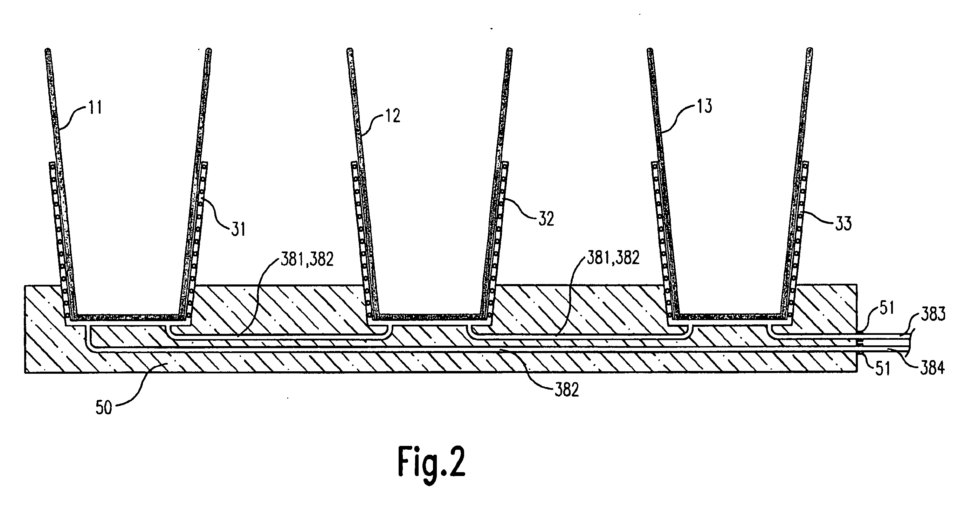

Owing to the thermal connection by means of a cooling conduit, the cooling device can also be applied at a distance from the cooling body with the holder and/or be shared by a number of cooling bodies and holders. An example hereof is shown in figure 2. Three cooling bodies 31..33 are herein integrated into the top 50 of a piece of furniture, such as for instance a tabletop, desktop or a top of a sideboard, into which a secondary cooling conduit of the above described type is incorporated invisibly.

Cooling bodies 31..33 each receive a removable holder 11..13, each of which provides space for one or more cut flowers in a suitable medium such as water. At an outer end of the tabletop the cooling conduits 381,382 provide the option of a coupling 51 for flexible further conduits 383,384 through which the secondary cooling medium is transported from and to a heat exchanger of a cooling device, which is disposed at a distance and out of sight. The conduit parts in the top of the piece of furniture are embodied in steel, while for instance polyethylene (thylene) is a suitable material for the flexible conduit. A particularly attractive stylistic whole is obtained by thus incorporating the holders and cooling bodies in the top of the piece of furniture. The possibly unattractive and noise-producing cooling device is situated here out of sight and hearing range.

In addition to being suitable for home use, the device shown in figures 1 and 2 is particularly suitable for presenting and displaying cut flowers in conditioned manner in spaces of companies and institutions, such as for instance in waiting rooms and conference rooms of offices and institutions, and particularly in hotels and restaurants. In order to create a good impression there is frequently a demand here for an appealing decoration of the space in question. This is provided by an attractively filled vase with fresh cut flowers, albeit that the flowers must appear fresh at all times, since they otherwise do more harm than good. This latter requires that the flowers must be replaced regularly, which is relatively expensive and can be time-consuming. The invention however provides a method for displaying cut flowers which obviates these drawbacks in significant measure and for this purpose makes use of a device according to the invention. A bouquet of flowers is herein arranged in a holder according to the invention and, after being filled with a suitable medium such as water, the holder is brought into heat-exchanging contact with the cooling body. The conditioning resulting herefrom ensures a significantly longer lifespan of the flowers, so that the frequency with which the flowers have to be replaced, and therefore also the costs, are reduced significantly.

Before the flowers wilt, the holder with flowers is removed from the cooling body and exchanged for an identical or similar holder with a fresh bouquet of flowers placed therein. This can be realized very quickly and is thereby considerably less time-consuming and labour-intensive at a location than refilling the same vase at the location. This can be done by own staff or be obtained as a service from, or offered as, a business specializing therein.

Particularly if the holder of the device comprises a conical inner vase which falls wholly or largely into a surrounding outer casing, as in the first exemplary embodiment, exchanging of the inner vase can be simplified considerably by means of a strong, for instance metal ring with two handles. The ring has a diameter close to a largest diameter of the conical inner vase and is placed around the inner vase from the bottom, whereby the ring secures itself close to the top of the inner vase and the (filled) inner vase can be lifted by the handles. The inner vase with flowers is thus lowered into the outer casing using the handle ring. The ring then moves downward and remains lying round the inner vase and concealed inside the edge of the outer casing, until the time comes to once again remove the inner vase. For this purpose the inner ring is moved outward again.

Although the invention has been further elucidated above on the basis of only several exemplary embodiments, it will be apparent that the invention is by no means limited thereto. On the contrary, many variations and embodiments are still possible within the scope of the invention. The design of the holder and of the cooling body can thus be varied to one's heart's content to adapt it to an interior of a surrounding space or the individual taste of the (end) user.

Instead of having a standing form, the cooling body with the holder can also take a hanging form, wherein the suspending means thereof for instance comprise the cooling conduit. Instead of a compressor cooling, it is also possible to opt for another type of cooling for the cooling device, such as for instance a Peltier element which can optionally then directly cool the medium flowing from and to the cooling body.

The materials and dimensions used in the examples can be modified as required so as to meet a specific requirement. In respect of this requirement, the invention can for instance be applied in a house for personal use as well as by companies and institutions for commercial use. With an eye to this latter field of application, the device can be particularly modified and adapted to a possible corporate identity of the (end) user, for instance by embodying the device in a specific colour scheme or shape, or by providing the device with an identifying symbol such as a company name or logo.

In the shown exemplary embodiments use is made of a separate cooling system with a primary and secondary cooling medium flow. Particularly in the first exemplary embodiment, wherein all cooling conduits are situated inside the device, it is also possible to suffice with a single cooling system, wherein the primary cooling medium (freon) flows directly from the cooling device through or along the at least one cooling body.

## Claims

1. Device for keeping cut flowers in condition, comprising a holder (10) for receiving the cut flowers therein in a suitable medium, in particular water, and comprising cooling means with at least one cooling body (30) wich is capable of heat-exchanging contact with the medium, **characterized in that** the cooling means comprise a cooling device (35) which is separated from the cooling body and which is in heat-exchanging contact with the at least one cooling body by means of at least one cooling conduit (361, 362) and a cooling medium flowing at least during operation therein.

2. Device as claimed in claim 1, **characterized in that** the at least one cooling conduit comprises a primary cooling conduit (361, 362) in which, at least during operation, a primary cooling medium flows and a secondary cooling conduit (381, 382) which, at least during operation, carries a secondary cooling medium, and that the primary and secondary cooling conduits are in heat-exchanging contact by means of a heat exchanger (37).

3. Device as claimed in claim 1 or 2, **characterized in that** the cooling conduit is at least partly flexible.

4. Device as claimed in one or more of the foregoing claims, **characterized in that** the at least one cooling body extends at least practically all around a substantially cup-shaped inner space for at least partly receiving the holder therein for removal and in heat-exchanging contact.

5. Device as claimed in claim 4, **characterized in that** at least the at least one cooling body is arranged in a top of a piece of furniture, in particular a tabletop or a top of a sideboard.

6. Device as claimed in one or more of the foregoing claims, **characterized in that** a number of cooling bodies (31, 32, 33) are coupled to a shared cooling device by means of an optionally shared cooling conduit, and that the cooling bodies are in heat-exchanging contact with a number of holders.

7. Device as claimed in one or more of the foregoing claims, **characterized in that** the cooling device comprises a compressor cooling which is able and adapted to cause alternate expansion and compression of a cooling medium.

8. Device as claimed in one or more of the claims 1-6, **characterized in that** the cooling device comprises a Peltier element, a cold side of which is in heat-exchanging contact with the cooling medium and a warm side thereof with a forced airflow of ambient air during operation.

9. Holder for application in the device as claimed in one or more of the claims 1 - 8.

## Patentansprüche

1. Vorrichtung zum Frischhalten von Schnittblumen, mit einem Halter (10) zur Aufnahme der Schnittblumen darin in einem geeigneten Medium, insbesondere Wasser, und mit Kühlmitteln mit mindestens einem Kühlkörper (30), der zu Wärmeaustauschkontakt mit dem Medium in der Lage ist, **dadurch gekennzeichnet, dass** die Kühlmittel eine Kühlvorrichtung (35) umfassen, die von dem Kühlkörper getrennt ist und die mit dem mindestens einen Kühlkörper mittels mindestens einer Kühlleitung (351, 362) und einem Kühlmedium, das zumindest im Betrieb darin strömt, in Wärmeaustauschkontakt steht.

2. Vorrichtung nach Anspruch 1, **dadurch gekennzeichnet, dass** die mindestens eine Kühlleitung eine Primärkühlleitung (361, 362), in der zumindest im Betrieb ein Primärkühlmedium strömt, und eine Sekundärkühlleitung (381, 382), die zumindest im Betrieb ein Sekundärkühlmedium führt, umfasst, und dass die Primär- und die Sekundärkühlleitung mittels eines Wärmetauschers (37) in Wärmeaustauschkontakt stehen.

3. Vorrichtung nach Anspruch 1 oder 2, **dadurch gekennzeichnet, dass** die Kühlleitung zumindest teilweise flexibel ist.

4. Vorrichtung nach einem oder mehreren der vorhergehenden Ansprüche, **dadurch gekennzeichnet, dass** sich der mindestens eine Kühlkörper zumindest nahezu rings um einen im Wesentlichen becherförmigen Innenraum erstreckt, um den Halter darin zumindest teilweise darin zum Entfernen und in Wärmeaustauschkontakt aufzunehmen.

5. Vorrichtung nach Anspruch 4, **dadurch gekennzeichnet, dass** mindestens der mindestens eine Kühlkörper in einer Oberseite eines Möbelstücks, insbesondere einer Tischplatte oder einer Oberseite einer Anrichte, angeordnet ist.

6. Vorrichtung nach einem oder mehreren der vorhergehenden Ansprüche, **dadurch gekennzeichnet, dass** mehrere Kühlkörper (31, 32, 33) mittels einer wahlweisen geteilten Kühlleitung mit einer geteilten Kühlvorrichtung verbunden sind und dass die Kühlkörper mit mehreren Haltern in Wärmeaustauschkontakt stehen.

7. Vorrichtung nach einem oder mehreren der vorhergehenden Ansprüche, **dadurch gekennzeichnet, dass** die Kühlvorrichtung eine Kompressorkühlung umfasst, die dazu in der Lage und ausgeführt ist, abwechselndes Ausdehnen und Komprimieren eines Kühlmediums zu bewirken.

8. Vorrichtung nach einem oder mehreren der Ansprüche 1 - 6, **dadurch gekennzeichnet, dass** die Kühlvorrichtung ein Peltier-Element umfasst, von dem im Betrieb eine Kaltseite mit dem Kühlmedium und eine Warmseite davon mit einem Zwangsluftstrom der Umgebungsluft in Wärmeaustauschkontakt steht.

9. Halter zur Anwendung in der Vorrichtung nach einem oder mehreren der Ansprüche 1 - 8.

## Revendications

1. Dispositif pour conserver fraîches des fleurs coupées, comprenant un support (10) pour recevoir les fleurs coupées dans un milieu approprié, en particulier de l'eau, et comprenant un moyen de refroidissement avec au moins un corps de refroidissement (30) qui est capable d'échanger de la chaleur par contact avec le milieu, **caractérisé en ce que** le moyen de refroidissement comprend un dispositif de refroidissement (35) qui est séparé du corps de refroidissement et qui est en contact d'échange de chaleur avec l'au moins un corps de refroidissement au moyen d'au moins un conduit de refroidissement (361, 362) et d'un milieu de refroidissement s'écoulant au moins pendant l'utilisation dans celui-ci.

2. Dispositif selon la revendication 1, **caractérisé en ce que** l'au moins un conduit de refroidissement comprend un conduit de refroidissement primaire (361, 362) dans lequel, au moins pendant l'utilisation, s'écoule un milieu de refroidissement primaire, et un conduit de refroidissement secondaire (381, 382) qui, au moins pendant l'utilisation, porte un milieu de refroidissement secondaire, et **en ce que** les conduits de refroidissement primaire et secondaire sont en contact d'échange de chaleur au moyen d'un échangeur de chaleur (37).

3. Dispositif selon la revendication 1 ou 2, **caractérisé en ce que** le conduit de refroidissement est au moins en partie flexible.

4. Dispositif selon l'une quelconque ou plusieurs des revendications précédentes, **caractérisé en ce que** l'au moins un corps de refroidissement s'étend au moins pratiquement tout autour d'un espace interne sensiblement en forme de coupe, pour recevoir au moins en partie le support à l'intérieur de celui-ci en vue de son retrait et en contact d'échange de chaleur.

5. Dispositif selon la revendication 4, **caractérisé en ce qu'**au moins l'au moins un corps de refroidissement est disposé dans la partie supérieure d'un meuble, en particulier un dessus de table ou le dessus d'une desserte.

6. Dispositif selon l'une quelconque ou plusieurs des revendications précédentes, **caractérisé en ce qu'**un certain nombre de corps de refroidissement (31, 32, 33) sont accouplés à un dispositif de refroidissement commun au moyen d'un conduit de refroidissement éventuellement commun, et **en ce que** les corps de refroidissement sont en contact d'échange de chaleur avec un certain nombre de supports.

7. Dispositif selon l'une quelconque ou plusieurs des revendications précédentes, **caractérisé en ce que** le dispositif de refroidissement comprend un refroidissement par compresseur qui est en mesure de, et qui est prévu pour, alterner l'expansion et la compression d'un milieu de refroidissement.

8. Dispositif selon l'une quelconque ou plusieurs des revendications 1 à 6, **caractérisé en ce que** le dispositif de refroidissement comprend un élément Peltier, dont un côté froid est en contact d'échange de chaleur avec le milieu de refroidissement et présentant un côté chaud avec un flux d'air forcé d'air ambiant au cours de l'utilisation.

9. Support destiné à être utilisé dans le dispositif selon l'une quelconque ou plusieurs des revendications 1 à 8.
